# FASCICULE DE BREVET EUROPEEN

(11) **EP 3 581 781 B1**
(45) Date de publication et mention de la délivrance du brevet: **28.07.2021**
(21) Numéro de dépôt: 19179133.4
(22) Date de dépôt: 07.06.2019
(51) Int. Cl.: F02K 3/06, F02K 3/105, F02C 7/18

(54) **SYSTEME DE PROPULSION D'UN AERONEF COMPORTANT UNE STRUCTURE INTERIEURE FIXE PRESENTANT UNE FENTE D'EVACUATION**
ANTRIEBSSYSTEM EINES LUFTFAHRZEUGS MIT EINER BEFESTIGTEN INNENSTRUKTUR, DIE EINEN AUSLASSSCHLITZ AUFWEIST
PROPULSION SYSTEM OF AN AIRCRAFT COMPRISING A FIXED INTERIOR STRUCTURE HAVING AN EVACUATION SLOT

(30) Priorité: 13.06.2018 FR 1855145
(43) Date de publication de la demande: 18.12.2019
(73) Titulaire: Airbus Operations (S.A.S.), 31060 Toulouse Cedex 9 (FR)
(72) Inventeur: GACHES, Thierry, 31060 TOULOUSE (FR); CZAPLA, Lionel, 31060 TOULOUSE (FR); SABATHIER, Bastian, 31060 TOULOUSE (FR)
(74) Mandataire: Cabinet Le Guen Maillet

(56) Documents cités:
- DE-A1-102011 106 961
- FR-A1- 2 590 320
- US-B2- 9 714 612

## Description

### DOMAINE TECHNIQUE

La présente invention concerne un système de propulsion d'un aéronef comportant une structure intérieure fixe présentant une fente d'évacuation des gaz chauds. La présente invention concerne également un aéronef comportant au moins un tel système de propulsion.

### ETAT DE LA TECHNIQUE ANTERIEURE

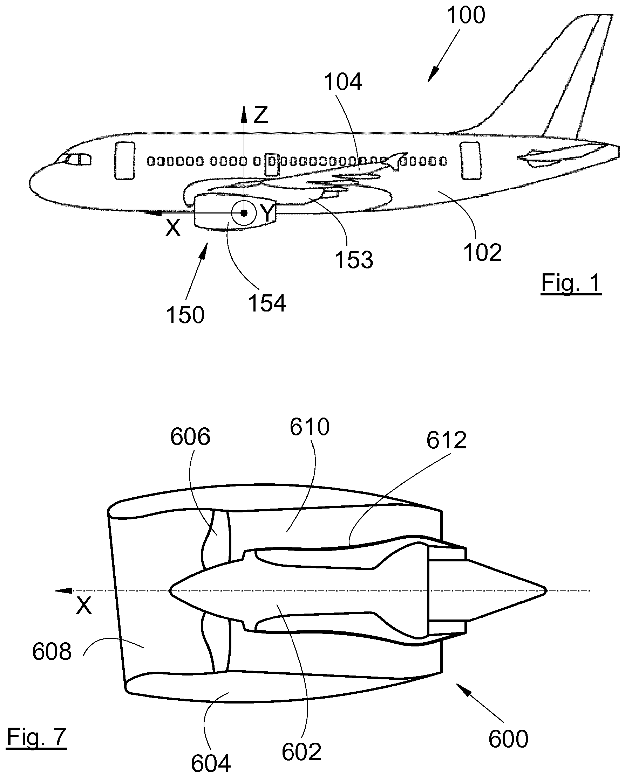

La Fig. 7 est une vue de côté et en coupe d'un système de propulsion 600 de l'état de la technique pour un aéronef. Le système de propulsion 600 prend la forme d'une turbomachine comportant un noyau 602 et une nacelle 604 disposée autour du noyau 602 et une soufflante 606 montée à l'avant du noyau 602.

L'air pénètre dans le système de propulsion 600 par une entrée d'air 608 délimitée par l'avant de la nacelle 604.

Après avoir traversé la soufflante 606, l'air se divise en un flux primaire qui traverse le noyau 602 comportant entre autres un système de combustion, et en un flux secondaire qui circule entre le noyau 602 et la nacelle 604 dans une veine secondaire 610 prévue à cet effet.

La veine secondaire 610 est ainsi délimitée sur l'extérieur par la nacelle 604 et sur l'intérieur par une structure intérieure fixe 612 (également appelés IFS pour « Internai Fixed Structure » en terminologie Anglo-Saxonne) solidaire du noyau 602.

La structure intérieure fixe 612 prend globalement la forme d'un cylindre qui ferme le compartiment autour du noyau 602.

Les documents DE-A-10 2011 106961, US-B-9,714,612 et FR-A-2 590 320 divulguent des systèmes de propulsion selon l'état de la technique.

Avec l'augmentation du taux de dilution des moteurs, les noyaux ainsi que les compartiments les entourant deviennent de plus en plus chauds et il est nécessaire d'évacuer cette chaleur pour limiter la température de zone afin d'installer des équipements ou afin d'utiliser des matériaux plus légers.

### EXPOSE DE L'INVENTION

Un objet de la présente invention est de proposer un système de propulsion d'un aéronef comportant une structure intérieure fixe présentant une fente d'évacuation des gaz chauds qui permet de limiter la température du compartiment autour du noyau de ce même système de propulsion.

A cet effet, est proposé un système de propulsion d'un aéronef, ledit système de propulsion comportant un noyau, une structure intérieure fixe solidaire du noyau et disposée autour du noyau, et une nacelle entourant le noyau et la structure intérieure fixe, où une veine secondaire est délimitée entre la structure intérieure fixe et la nacelle, où la structure intérieure fixe présente une fente qui permet la communication fluidique entre la veine secondaire et un compartiment qui est à l'intérieur de la structure intérieure fixe et autour du noyau, où la fente permet l'évacuation d'une partie des gaz chauds présents dans le compartiment autour du noyau
où la structure intérieure fixe comporte un panneau avant qui est disposé à l'avant de la fente et un panneau arrière disposé à l'arrière de la fente, la fente est définie par un écart entre le panneau avant et le panneau arrière, et où des entretoises disposées en travers de la fente sont fixées au panneau avant et au panneau arrière,
le système de propulsion étant caractérisé en ce que le panneau avant comporte une paroi intérieure orientée vers le compartiment et une paroi extérieure orientée vers la veine secondaire, en ce qu'au niveau d'une extrémité arrière du panneau avant, la paroi intérieure rejoint la paroi extérieure par un plan incliné, en ce que le panneau arrière prend la forme d'une plaque qui comporte une partie avant qui prolonge à distance la paroi intérieure, une partie arrière qui est à l'arrière de la partie avant et qui prolonge à distance la paroi extérieure et un pli qui relie la partie arrière et la partie avant, en ce que la fente est matérialisée entre la paroi intérieure et la partie avant, d'une part, entre l'extrémité arrière et la partie arrière, d'autre part, et entre le plan incliné et le pli, et en ce que les entretoises sont fixées entre l'extrémité arrière et la partie avant.

La présence de la fente permet l'évacuation d'une partie des gaz chauds présents dans le compartiment autour du noyau et ainsi une limitation de la température de la zone autour du noyau.

Avantageusement, le système de propulsion comporte une pluralité de raidisseurs, où chacun est fixé dans le compartiment, d'une part, à la paroi intérieure et, d'autre part, au panneau arrière.

Avantageusement, la paroi extérieure comporte une plaque avant qui s'étend de l'avant jusqu'à une zone de jonction et une plaque arrière qui s'étend de la zone de jonction à l'extrémité arrière,

L'invention propose également un aéronef comportant un système de propulsion selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue de côté et en coupe d'un système de propulsion selon l'invention,
la Fig. 3 est une vue en perspective d'un agrandissement du détail III de la Fig. 2,
la Fig. 4 est une représentation schématique d'une structure intérieure fixe vue en coupe selon une première variante de réalisation de l'invention,
la Fig. 5 est une représentation schématique d'une structure intérieure fixe vue en coupe selon une deuxième variante de réalisation de l'invention,
la Fig. 6 est une représentation schématique d'une structure intérieure fixe vue en coupe selon une troisième variante de réalisation de l'invention, et
la Fig. 7 est une vue de côté et en coupe d'un système de propulsion de l'état de la technique.

### EXPOSE DETAILLE DE MODES DE REALISATION

Dans la description qui suit, les termes relatifs à une position sont pris en référence à un aéronef en position d'avancement, c'est-à-dire comme il est représenté sur la Fig. 1.

La Fig. 1 montre un aéronef 100 qui comporte un fuselage 102 et une aile 104 de chaque côté du fuselage 102. Sous chaque aile 104, l'aéronef 100 présente un mât 153 sous lequel un système de propulsion 150 prenant la forme d'une turbomachine est fixé.

Dans la description qui suit et par convention, on appelle X l'axe longitudinal du système de propulsion 150 orienté positivement dans le sens d'avancement de l'aéronef 100, on appelle Y la direction transversale qui est horizontale lorsque l'aéronef est au sol et Z la direction verticale ou hauteur verticale lorsque l'aéronef est au sol, ces trois directions X, Y et Z étant orthogonales entre elles.

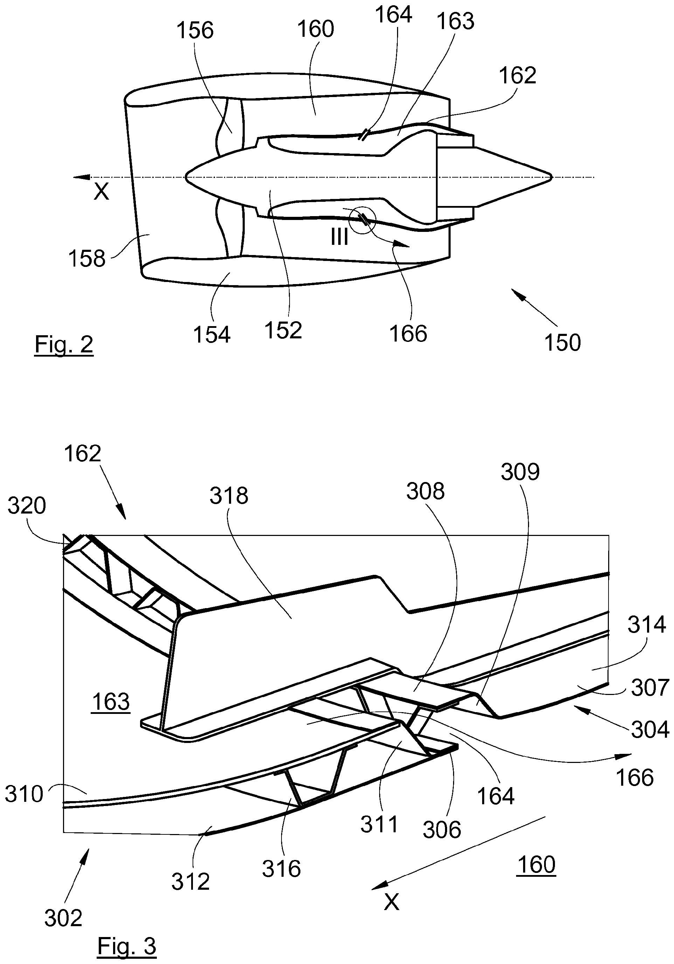

La Fig. 2 montre le système de propulsion 150 dont la structure est similaire à celle du système de propulsion 600 de l'état de la technique.

Le système de propulsion 150 comporte un noyau 152 et une nacelle 154 disposée autour du noyau 152 et une soufflante 156 montée à l'avant du noyau 152.

L'air pénètre dans le système de propulsion 150 par une entrée d'air 158 délimitée par l'avant de la nacelle 154. Après avoir traversé la soufflante 156, l'air se divise en un flux primaire qui traverse le noyau 152 comportant entre autres un système de combustion, et en un flux secondaire qui circule entre le noyau 152 et la nacelle 154 dans une veine secondaire 160 prévue à cet effet.

La veine secondaire 160 est ainsi délimitée sur l'extérieur par la nacelle 154 et sur l'intérieur par une structure intérieure fixe 162 (également appelés IFS pour « Internai Fixed Structure » en terminologie Anglo-Saxonne) solidaire du noyau 152.

La structure intérieure fixe 162 prend globalement la forme d'un cylindre autour du noyau 152 et elle délimite ainsi un compartiment 163 autour du noyau 152. La structure intérieure fixe 162 canalise à l'intérieur les gaz chauds qui circulent dans le noyau 152.

La nacelle 154 entoure également la structure intérieure fixe 162.

La structure intérieure fixe 162 peut être constituée de deux capots qui sont montés articulés autour d'un axe de charnière, en particulier en partie haute du noyau 152, pour permettre leur écartement du noyau 152 lors des procédures de maintenance.

Pour évacuer la chaleur du compartiment 163 autour du noyau 152, la structure intérieure fixe 162 présente une fente 164 qui permet la communication fluidique entre la veine secondaire 160 et le compartiment 163 qui est à l'intérieur de la structure intérieure fixe 162 et qui permet donc l'évacuation d'une partie des gaz chauds présents dans le compartiment autour du noyau.

La chaleur peut ainsi être évacuée vers la veine secondaire 160 comme le montre la flèche 166.

La fente 164 peut être une fente unique qui s'étend sur tout le tour de la structure intérieure fixe 162 ou une succession de plusieurs fentes disposées les unes à la suite des autres. En particulier, dans le cas où la structure intérieure fixe 162 comporte deux capots, il y a une fente par capot.

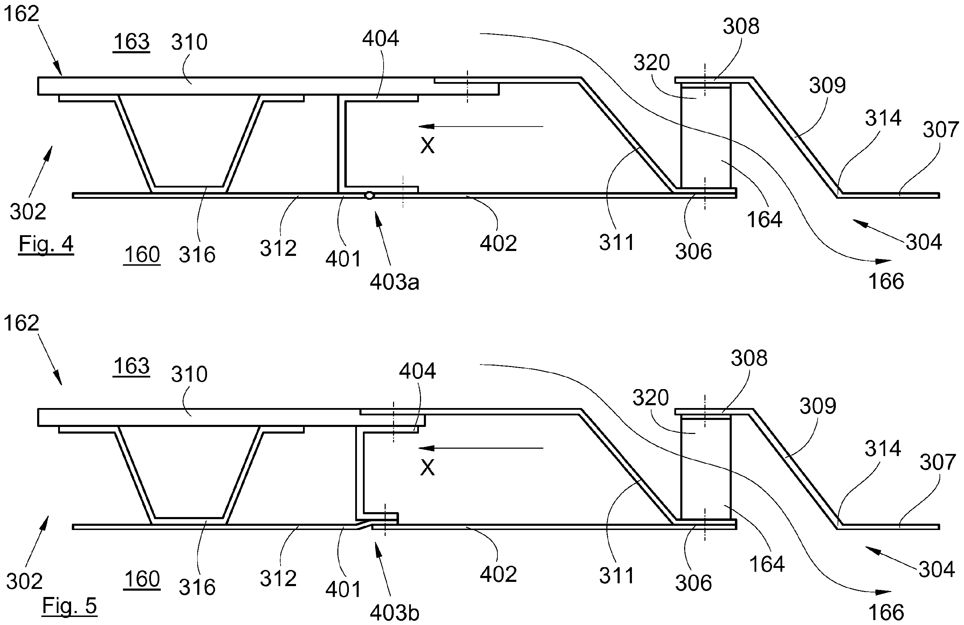

La Fig. 3 montre la structure intérieure fixe 162 qui sépare le compartiment 163 et la veine secondaire 160. Les Figs. 4 à 6 montrent trois variantes de la Fig. 3.

Dans le mode de réalisation de l'invention présenté sur les Figs. 3 à 6, la structure intérieure fixe 162 comporte un panneau avant 302 qui est disposé à l'avant de la fente 164 et un panneau arrière 304 disposé à l'arrière de la fente 164 et qui rejoint la tuyère.

L'écart entre le panneau avant 302 et le panneau arrière 304 matérialise la fente 164 et l'écart est maintenu par la mise en place d'entretoises 320 disposées en travers de la fente 164 entre le panneau avant 302 et le panneau arrière 304 et fixées à la fois au panneau avant 302 et au panneau arrière 304. Dans le mode de réalisation de l'invention présenté à la Fig. 3, les entretoises 320 prennent la forme d'une succession de poutres oméga.

Le panneau avant 302 comporte une paroi intérieure 310 orientée vers le compartiment 163 et une paroi extérieure 312 orientée vers la veine secondaire 160.

Au niveau de l'extrémité arrière 306 du panneau avant 302, la paroi intérieure 310 rejoint la paroi extérieure 312 par un plan incliné 311 pour former une jupe qui délimite la fente 164.

Le panneau arrière 304 prend ici la forme d'une plaque 314 qui comporte une partie avant 308 sous forme d'une jupe qui prolonge à distance la paroi intérieure 310, une partie arrière 307 qui est à l'arrière de la partie avant 308 et qui prolonge à distance la paroi extérieure 312 et un pli 309 qui relie la partie arrière 307 et la partie avant 308.

La fente 164 est ainsi matérialisée entre la paroi intérieure 310 et la partie avant 308, d'une part, entre l'extrémité arrière 306 et la partie arrière 307, d'autre part, et entre le plan incliné 311 et le pli 309.

Les entretoises 320 sont fixées entre l'extrémité arrière 306 et la partie avant 308. La fixation est réalisée par exemple par des systèmes vis-écrous.

Dans les modes de réalisation des Figs. 4 et 5, afin de renforcer le panneau avant 302, des renforts 316 sont fixés entre la paroi intérieure 310 et la paroi extérieure 312, par exemple par des systèmes vis-écrous. Dans le mode de réalisation de l'invention présenté à la Fig. 3, le renfort 316 prend la forme d'une poutre oméga.

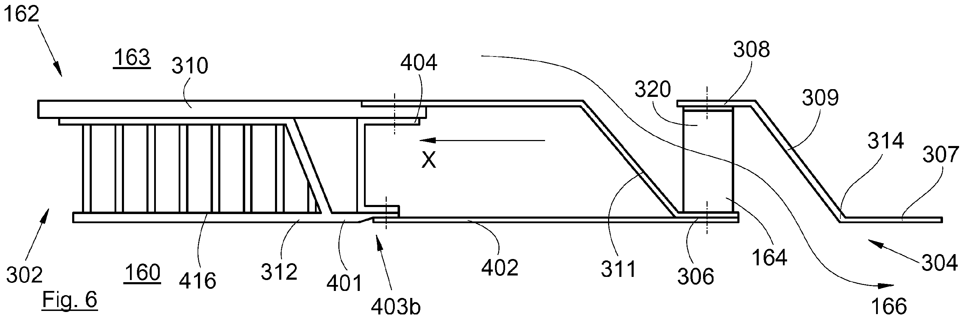

Dans le mode de réalisation de la Fig. 6, afin de renforcer le panneau avant 302, une structure composite 416 est fixée entre la paroi intérieure 310 et la paroi extérieure 312, par exemple par collage. La structure composite 416 comporte deux plaques entre lesquelles est fixée une structure en nid d'abeilles et dans le mode de réalisation de l'invention présenté à la Fig. 6, l'une des plaques est réalisée par la paroi extérieure 312.

Le plan incliné 311 peut être intégré aux pièces 310 et 312, mais il peut aussi être rapporté, dans ce cas, le plan incliné 311 est fixé entre la paroi intérieure 310 et la paroi extérieure 312 par exemple par des systèmes vis-écrous.

Pour assurer la cohésion de la structure intérieure fixe 162 entre le panneau avant 302 et le panneau arrière 304, le système de propulsion comporte une pluralité de raidisseurs 318, où chacun est fixé dans le compartiment 163, d'une part, à la paroi intérieure 310 et, d'autre part, au panneau arrière 304. La fixation est réalisée par exemple par des rivets ou des systèmes vis/écrous.

Les matériaux utilisés pour réaliser les différents éléments du système de propulsion sont, par exemple un alliage de titane ou en composite haute température.

La paroi extérieure 312 peut être monobloc entre l'avant et l'extrémité arrière 306, mais elle peut être séparée en deux.

Les Figs. 4 à 6 montrent des variantes dans lesquelles, la paroi extérieure 312 comporte une plaque avant 401 qui s'étend de l'avant jusqu'à une zone de jonction 403a-b et une plaque arrière 402 qui s'étend de la zone de jonction 403a-b à l'extrémité arrière 306. La plaque arrière 402 constitue une plaque de renfort qui présente une rigidité supérieure à celle de la plaque avant 401.

La zone 403a-b correspond à la zone où la plaque avant 401 et la plaque arrière 402 sont fixées l'une à l'autre.

Dans le cas de la Fig. 4, pour exemple, la zone de jonction 403a correspond à un cordon de soudure. Dans le cas des Figs. 5 et 6, toujours pour exemple, la zone de jonction correspond à une fixation par système vis-écrous.

La liaison 403a-b entre les plaques 401 et 402 permet d'optimiser au juste besoin le design local des pièces. Ainsi la plaque arrière 402 et la plaque avant 401 peuvent être réalisées dans des matériaux différents et être fixées l'une à l'autre grâce à une liaison vis/écrous (type 403b). Ainsi la plaque arrière 402 et la plaque avant 401 peuvent avoir des épaisseurs différentes et être fixées l'une à l'autre grâce à une liaison soudée (type 403a) ou vis/écrous (type 403b) ou autre en vue d'optimiser la tenue et la masse.

La plaque arrière 402, le plan incliné 311 et le pli 309 sont en contact avec l'air chaud du compartiment 163. Les matériaux de ces éléments seront donc adaptés selon les températures de l'air et seront par exemple en titane, inconel, acier, composites haute et basse température ou autre.

Pour renforcer la zone de jonction 403a-b, un cadre de renfort 404 est fixé entre la paroi intérieure 310 et la paroi extérieure 312 au niveau de la zone de jonction 403a-b.

Le cadre de renfort 404 comporte une âme, une première aile fixée à la paroi intérieure 310 et une deuxième aile fixée à la plaque avant 401 et à la plaque arrière 402. Ici, le cadre de renfort 404 est un cadre en C, mais il pourrait s'agir d'un cadre en I. La première aile et la deuxième aile sont fixées à chacune des extrémités de l'âme.

Dans le cas de la Fig. 5, la plaque avant 401 est prise en sandwich entre la deuxième aile et la plaque arrière 402.

## Revendications

1. Système de propulsion (150) d'un aéronef (100), ledit système de propulsion (150) comportant :
- un noyau (152),
- une structure intérieure fixe (162) solidaire du noyau (152) et disposée autour du noyau (152), et
- une nacelle (154) entourant le noyau (152) et la structure intérieure fixe (162), où une veine secondaire (160) est délimitée entre la structure intérieure fixe (162) et la nacelle (154),
où la structure intérieure fixe (162) présente une fente (164) qui permet la communication fluidique entre la veine secondaire (160) et un compartiment (163) qui est à l'intérieur de la structure intérieure fixe (162) et autour du noyau (152) où la fente permet l'évacuation d'une partie des gaz chauds présents dans le compartiment autour du noyau, où la structure intérieure fixe (162) comporte un panneau avant (302) qui est disposé à l'avant de la fente (164) et un panneau arrière (304) disposé à l'arrière de la fente (164), où la fente (164) est définie par un écart entre le panneau avant (302) et le panneau arrière (304), et où des entretoises (320) disposées en travers de la fente (164) sont fixées au panneau avant (302) et au panneau arrière (304),
le système de propulsion (150) étant **caractérisé en ce que** le panneau avant (302) comporte une paroi intérieure (310) orientée vers le compartiment (163) et une paroi extérieure (312) orientée vers la veine secondaire (160), **en ce qu'**au niveau d'une extrémité arrière (306) du panneau avant (302), la paroi intérieure (310) rejoint la paroi extérieure (312) par un plan incliné (311), **en ce que** le panneau arrière (304) prend la forme d'une plaque (314) qui comporte une partie avant (308) qui prolonge à distance la paroi intérieure (310), une partie arrière (307) qui est à l'arrière de la partie avant (308) et qui prolonge à distance la paroi extérieure (312) et un pli (309) qui relie la partie arrière (307) et la partie avant (308), **en ce que** la fente (164) est matérialisée entre la paroi intérieure (310) et la partie avant (308), d'une part, entre l'extrémité arrière (306) et la partie arrière (307), d'autre part, et entre le plan incliné (311) et le pli (309), et **en ce que** les entretoises (320) sont fixées entre l'extrémité arrière (306) et la partie avant (308).

2. Système de propulsion (150) selon la revendication 1, **caractérisé en ce qu'**il comporte une pluralité de raidisseurs (318), où chacun est fixé dans le compartiment (163), d'une part, à la paroi intérieure (310) et, d'autre part, au panneau arrière (304).

3. Système de propulsion (150) selon l'une des revendications 1 ou 2, **caractérisé en ce que** la paroi extérieure (312) comporte une plaque avant (401) qui s'étend de l'avant jusqu'à une zone de jonction (403a-b) et une plaque arrière (402) qui s'étend de la zone de jonction (403a-b) à l'extrémité arrière (306).

4. Aéronef (100) comportant un système de propulsion (150) selon l'une des revendications précédentes.

## Patentansprüche

1. Antriebssystem (150) eines Luftfahrzeugs (100), wobei das Antriebssystem (150) aufweist:
- einen Kern (152),
- eine fest mit dem Kern (152) verbundene und um den Kern (152) herum angeordnete ortsfeste innere Struktur (162), und
- eine den Kern (152) und die ortsfeste innere Struktur (162) umgebende Gondel (154), wobei eine Sekundärströmung (160) zwischen der ortsfesten inneren Struktur (162) und der Gondel (154) begrenzt wird,
wobei die ortsfeste innere Struktur (162) einen Schlitz (164) aufweist, der die Fluidverbindung zwischen der Sekundärströmung (160) und einem Abteil (163) ermöglicht, das sich innerhalb der ortsfesten inneren Struktur (162) und um den Kern (152) herum befindet, wobei der Schlitz die Abfuhr eines Teils der im Abteil um den Kern herum vorhandenen heißen Gase ermöglicht, wobei die ortsfeste innere Struktur (162) ein vorderes Paneel (302), das vor dem Schlitz (164) angeordnet ist, und ein hinteres Paneel (304) aufweist, das hinter dem Schlitz (164) angeordnet ist, wobei der Schlitz (164) von einem Abstand zwischen dem vorderen Paneel (302) und dem hinteren Paneel (304) definiert wird, und wobei quer über den Schlitz (164) angeordnete Abstandshalter (320) am vorderen Paneel (302) und am hinteren Paneel (304) befestigt sind,
wobei das Antriebssystem (150) **dadurch gekennzeichnet ist, dass** das vordere Paneel (302) eine zum Abteil (163) ausgerichtete Innenwand (310) und eine zur Sekundärströmung (160) ausgerichtete Außenwand (312) aufweist, dass im Bereich eines hinteren Endes (306) des vorderen Paneels (302) die Innenwand (310) über eine geneigte Ebene (311) mit der Außenwand (312) verbunden ist, dass das hintere Paneel (304) die Form einer Platte (314) annimmt, die einen vorderen Teil (308), der die Innenwand (310) in Abstand verlängert, einen hinteren Teil (307), der sich hinter dem vorderen Teil (308) befindet und der die Außenwand (312) in Abstand verlängert, und einen Knick (309) aufweist, der den hinteren Teil (307) und den vorderen Teil (308) verbindet, dass der Schlitz (164) zwischen der Innenwand (310) und dem vorderen Teil (308) einerseits, zwischen dem hinteren Ende (306) und dem hinteren Teil (307) andererseits, und zwischen der geneigten Ebene (311) und dem Knick (309) hergestellt wird, und dass die Abstandshalter (320) zwischen dem hinteren Ende (306) und dem vorderen Teil (308) befestigt sind.

2. Antriebssystem (150) nach Anspruch 1, **dadurch gekennzeichnet, dass** es eine Vielzahl von Versteifungen (318) aufweist, die je im Abteil (163) einerseits an der Innenwand (310) und andererseits am hinteren Paneel (304) befestigt sind.

3. Antriebssystem (150) nach einem der Ansprüche 1 oder 2, **dadurch gekennzeichnet, dass** die Außenwand (312) eine vordere Platte (401), die sich von vorne bis zu einem Verbindungsbereich (403a-b) erstreckt, und eine hintere Platte (402) aufweist, die sich vom Verbindungsbereich (403a-b) bis zum hinteren Ende (306) erstreckt.

4. Luftfahrzeug (100), das ein Antriebssystem (150) nach einem der vorhergehenden Ansprüche aufweist.

## Claims

1. Propulsion system (150) of an aircraft (100), said propulsion system (150) comprising:
- a core (152),
- a fixed interior structure (162) that is secured to the core (152) and is arranged around the core (152), and
- a nacelle (154) that surrounds the core (152) and the fixed interior structure (162), a secondary duct (160) being delimited between the fixed interior structure (162) and the nacelle (154),
the fixed interior structure (162) having a slot (164) which permits fluid communication between the secondary duct (160) and a compartment (163) which is inside the fixed interior structure (162) and around the core (152), the slot permitting evacuation of part of the hot gases present in the compartment around the core, the fixed interior structure (162) comprising a front panel (302) which is arranged at the front of the slot (164) and a rear panel (304) which is arranged at the rear of the slot (164), the slot (164) being defined by a separation between the front panel (302) and the rear panel (304), and spacers (320) arranged across the slot (164) being attached to the front panel (302) and to the rear panel (304),
the propulsion system (150) being **characterized in that** the front panel (302) comprises an interior wall (310) oriented towards the compartment (163) and an outer wall (312) oriented towards the secondary duct (160), **in that** at a rear end (306) of the front panel (302), the interior wall (310) meets the exterior wall (312) via an inclined plane (311), **in that** the rear panel (304) is in the form of a plate (314) that comprises a front part (308) which extends in line with and at a distance from the interior wall (310), a rear part (307) which is the rear of the front part (308) and which extends in line with and at a distance from the interior wall (312) and a fold (309) which connects the rear part (307) and the front part (308), **in that** the slot (164) is created between the interior wall (310) and the front part (308), on one hand, between the rear end (306) and the rear part (307), on the other hand, and between the inclined plane (311) and the fold (309), and **in that** the spacers (320) are attached between the rear end (306) and the front part (308).

2. Propulsion system (150) according to Claim 1, **characterized in that** it comprises a plurality of stiffeners (318), each being attached in the compartment (163), to the interior wall (310) on one hand, and to the rear panel (304) on the other hand.

3. Propulsion system (150) according to either of Claims 1 and 2, **characterized in that** the exterior wall (312) comprises a front plate (401) extending from the front to a junction zone (403a-b) and a rear plate (402) extending from the junction zone (403a-b) to the rear end (306).

4. Aircraft (100) comprising a propulsion system (150) according to one of the preceding claims.
